# EUROPEAN PATENT SPECIFICATION

(11) **EP 0 336 733 B1**
(45) Date of publication and mention of the grant of the patent: **16.06.1993**
(21) Application number: 89303356.3
(22) Date of filing: 05.04.1989
(51) Int. Cl.: C04B 35/00, C04B 38/00, B22F 1/00, C08K 3/22, C08K 3/34, C08K 5/15, C08K 5/18, C08L 63/00

(54) **Compositions for production of molded articles**
Zusammensetzung zur Herstellung von Gegenständen in der Form
Composition pour la production d'articles par moulage

(30) Priority: 05.04.1988 JP 83886/88
(43) Date of publication of application: 11.10.1989
(73) Proprietor: MITSUI PETROCHEMICAL INDUSTRIES, LTD., Tokyo 100 (JP)
(72) Inventor: Hirai, Nobuki Mitsui Petrochemical Ind., Ltd., Chiba (JP); Tanada, Seiji Mitsui Petrochemical Ind., Ltd., Chiba (JP)
(74) Representative: Myerscough, Philip Boyd

(56) References cited:
- EP-A- 0 276 760
- EP-A- 0 300 039
- SOVIET INVENTIONS ILLUSTRATED Week K 01, 16 February 1983, abstract no. 02038 K/01, Derwent Publications Ltd., London, GB; & SU - A - 910552 (GORKI ENG. CONS. INST.) 07.03.1982

## Description

### FIELD OF THE INVENTION

This invention relates to raw material compositions for the production of molded articles having high performance and more particularly to compositions for the production of molded ceramic articles, which can produce molded ceramic articles by plastic molding methods such as an injection molding or an extrusion molding.

### BACKGROUND OF THE INVENTION

Various methods for producing molded ceramic articles have been proposed. In recent years, attention has been directed to an injection molding method capable of producing molded articles having complicated shapes in high accuracy and large quantity.

In the injection molding for ceramics, compositions for the production of ceramics are molded into desired shapes by injection molding machine, the resulting molded articles are heated to decompose and evaporate components other than ceramic powder or metallic powder contained in the composition, and the molded articles are debinderized(dewaxed) and sintered to obtain molded ceramic articles having desired shapes. Usually, the compositions for the production of ceramics which are employed in this method comprise a ceramic powder and/or a metallic powder in admixture with, a binder and optionally, a lubricant, etc. The binder plays a role in imparting strength to the molded articles obtained by injection molding. Generally, either a water-soluble binder or a synthetic resin binder is used.

The water-soluble binders include polyvinyl alcohol, polyethylene glycol, methyl cellulose, carboxymethyl cellulose, ethyl cellulose, hydroxypropyl cellulose, etc., which have a lower viscosity as compared with the synthetic resin binders and well penetrate into the particles of the ceramic powder, but because of poor lubricity, they are practically diluted with water to impart lubricity thereto. However, those compositions containing the water-soluble binders have a problem that when they are injection-molded, the strength of a preform immediately after molding is very low and hence the molded articles are liable to be deformed, though the strength of the preform is gradually improved by the evaporation of water. It will be considered that the strength of the preform immediately after molding is increased by reducing the amount of diluent water to be mixed with the water-soluble binders. However, such reduction in the amount of diluent water give rise to a problem of lowering the flow charateristics of the compositions for the production of ceramics, which results in increasing the injection pressure of injection molding machines, wear of the molding machines by ceramic powder and contamination of the machines. Thus, this practice encounters difficulty.

The synthetic resin binders have been often used in the compositions for the production of ceramics, since they provide a preform with higher strength than the water-soluble binders. However, the synthetic resin binders have such problems that they are inferior in decomposability and volatility at low temperatures and the preform after debinderizing are poor in appearance. Therefore, the ceramic preform obtained by using the synthetic resin binders must be heated to a very high temperature for the decomposition of the binders and the temperature must be gradually raised to increase debinderizability.

As a method for shortening such debinderizing step, JP-A-62021753 (equivalent to EP-A-300039) proposed a method using binders whose decomposition quickly proceeds at a relatively low temperature, wherein polyalkylene carbonates are used as a binder.

### OBJECT OF THE INVENTION

The present invention is intended to solve such problems associated with the prior arts as mentioned above. An object of the invention is to provide a composition for the production of a molded articles, which composition contains a binder capable of producing a preform to be neither swollen nor broken, e.g., cracked, even when molded preform are debinderized at a very high heating rate, which object can be achieved by using combinations of polyalkylene carbonates with epoxy compounds as the binder.

### SUMMARY OF THE INVENTION

The composition for the production of molded articles according to the present invention comprises a ceramic powder and/or a metallic powder and an organic binder, wherein the organic binder contains as an essential ingredient a polyalkylene carbonate and a compound having at least one epoxy group in the molecule.

According to the present invention, there is provided a composition for the production of a moldeds articles, which comprises a compound containing at least one epoxy group in the molecule and preferably having a molecular weight M̅n of 100 to 20000 in addition to a polyalkylene carbonate as an organic binder for a ceramic powder or metallic powder.

### DETAILED DESCRIPTION OF THE INVENTION

The compositions for the production of molded ceramic articles according to the present invention are illustrated in more detail below.

By the term "molded articles" used herein is meant molded ceramics articles molded metallic articles, and articles molded of mixtures of powders of ceramics and metals, and also is meants premolded articles(preform).

In the compositions of the present invention, combinations of the polyalkylene carbonates with the compounds having at least one epoxy group in the molecule are used as the organic binder, each component of which is illustrated below.

The polyalkylene carbonates are used in the present invention as a binder for a ceramic powder and have excellent heat-decomposability. More particulary, the polyalkylene carbonates are rapidly heat-decomposed in a low temperature region in an oxidizing atmosphere, e.g., in air or even in a non-oxidizing atmosphere, e.g., in nitrogen gas. They exhibit excellent heat-decomposability as described above, even when they are used in combination with a ceramic powder or a metallic powder. These characteristics are peculiar to the polyalkylene carbonates, but not found in aromatic polycarbonates.

The polyalkylene carbonates can be prepared, for example, by copolymerizing at least one alkylene oxide such as ethylene oxide, propylene oxide, butene oxide or cyclohexene oxide with carbon dioxide (CO₂) in the presence of an organozinc catalyst. The resulting copolymers are linear high polymers whose chain is composed of alternating sequences of alkylene and carbonate groups or composed of alkylene groups linked through ether linkages. If desired, these polyalkylene carbonates may be modified with unsaturated carboxylic acids, etc. The polyalkylene carbonates have a molecular weight (in terms of M̅n) of preferably about 10,000 to 100,000, more preferably about 20,000 to 50,000.

Usually, any polyalkylene carbonates can be used in the present invention, but those having the alkylene group of about 2 to 6 carbon atoms are preferred. Polyethylene carbonate and polypropylene carbonate are preferably used.

Together with said polyalkylene carbonates in the present invention, compounds having at least one epoxy group in the molecule are used as binder components. In case that the compounds having at least one epoxy group in the molecule are used in combination with said polyalkylene corbonates as the binders in the compositions for the producion of molded ceramic articles, it has been found that weight loss on heating is smoothly made at the time when the molded ceramic preforms are debinderized by heating. In addition, extreme good debinderized products can be obtained without allowing the molded ceramic preforms to be swollen or cracked during debinderizing, even when heating rate during debinderizing is increased. As a result, debinderizing time can be shortened and the yields of the molded ceramic articles can be improved.

Concrete examples of the compounds having at least one epoxy group in the molecule include glycidyl ether epoxy compounds of polyphenol compounds such as bisphenol A, 2,2-bis(4-hydroxyphenylbutane)(sometimes abbreviated as bisphenol B), 1,1′-bis(4-hydroxy-phenyl)ethane (sometimes abbreviated as bisphenol AD), bis (4-hydroxyphenyl)methane (sometimes abbreviated as bisphenol F), 1,1,2,2-tetrakis(4-hydroxyphenyl)ethane, 4-hydroxyphenyl ether and p-(4-hydroxy)phenol; glycidyl ether epoxy compounds of the nucleus hydrogenated products of said polyphenol compounds; glycidyl ether epoxy compounds of polyhydric phenols such as catechol, resorcin, hydroquinone and phloroglucinol; glycidyl ether epoxy compounds of polyhydric alcohols such as ethylene glycol polypropylene glycol, butanediol, glycerol, erythritol and polyoxyalkylene glycols; novolak epoxy compounds; alicyclic epoxy compounds such as vinylcyclohexene dioxide, limonene dioxide and dicyclopentadiene dioxide; polyglycidyl ester epoxy compounds of ester condensates of polycarboxylic acids such as phthalic acid and cyclohexane-1,2-dicarboxylic acid; polyglycidylamine epoxy compounds; and methylepichloro type epoxy compounds,

These epoxy compounds have a molecular weight (M̅n) of 100 to 20,000 preferably 100 to 3,000, more preferably 300 to 1,000.

In the present invention, the organic binder composed of said polyalkylene carbonate and said epoxy compound is used in an amount of 20 to 65% by volume, preferably 35 to 60 % by volume based on the total amount of the composition for the production of the molded ceramic articles. The organic binder comprises 10 to 80 % by volume, preferably 20 to 60 % by volume of the polyalkylene carbonate and 90 to 20 % by volume, preferably 80 to 40 % by volume of the epoxy compound. The amount by volume is determined by dividing weight by density.

The organic binder may contain conventional additives such as a plasticizer, a lubricant, a wetting agent, a deflocculating agent, a surfactant, etc., which are usually incorporated in the composition for the production of mold ceramic articles.

Concrete examples of the additives include plasticizers such as diethyl phthalate and dioctyl phthalate; and lubricants such as fatty acids (e.g., lauric acid, myristic acid, palmitic acid, stearic acid, etc.), ester thereof and metal salts thereof.

The ceramic powders or metallic powders which can be used in the present invention include a vatiety of known materials, not by way of limitation, which are recited below.

### (1) Metallic powders

Powders of aluminum, silicon, scandium, yttrium, lanthanide, actinide, titanium, zirconium, hafnium, thorium, vanadium, niobium, tantalum, chromium, molybdenum, tungsten, manganese, technetium, rhenium, cobalt, nickel, ruthenium, rhodium, palladium, osmium, iridium, platinum, copper, silver, iron, gold, zinc, cadmium, thallium, germanium, tin, lead, arsenic, antimony, bismuth, tellurium polonium and alloys thereof such as Fe-Ni alloy, Ni-Cr-Fe alloy, Ni-Cr-Mo-Fe alloy, Mo-Fe-Ni alloy, Mn-Fe-Ni alloy, etc.

### (2) Metal oxides powders

Powders of the above-described metal oxides; oxides of other metals such as beryllium oxide, magnesium oxide, calcium oxide, strontium oxide, barium oxide, lanthanum oxide, gallium oxide, indium oxide, selenium oxide, etc.; oxides of a plurality of metallic elements, that is, metal oxides having perovskite structure such as NaNbO₃, SrZrO₃, PbZrO₃, BrTiO₃, BrZrO₃, PbTiO₃, AgTaO₃, BaTiO₃, LaAlO₃, metal oxides having spinel structure such as MgAl₂O₄, ZnAl₂O₄, CoAl₂O₄, NiAl₂O₄, NiCr₂O₄, FeCr₂O₄,MgFe₂O₄, Fe₂O₄, ZnFe₂O₄,metal oxides having ilmenite structure such as MgTiO₃, MnTiO₃, FeTiO₃, CoTiO₃, NiTiO₃, LiNbO₃, LiTaO₃, and metal oxides having garnet structure such as Gd₃GaO₁₈ and Y₃Fe₅O₈.

### (3) Metal carbides

Powders of metal carbides such as silicon carbide, titanium carbide, tantalum carbide, chromium carbide, molybdenum carbide, hafnium carbide, zirconium carbide, boron carbide,etc.,

### (4) Metal nitrides

Powders of metal nitrides such as silicon nitride, aluminum nitride, boron nitride, titanium nitride, etc.

### (5) Metal borides

Powders of metal borides such as titanium boride, zirconium boride, lanthanum boride, etc.

### (6) Surface-modified products of the above-recited powders (1) to (5).

Concretely, products obtained by modifying the surfaces of the above-described powders (1) to (5) with coupling agents, surfactants, polymerizable monomers, etc.

### (7) Mixtures of the above-recited powders (1) to (6).

Though there are no specific limitations with regard to the particle diameters of the ceramics powders and metallic powders, it is preferred that the powders have an average particle diameter of not larger than 100µm. It is particularly preferred that the ceramic powders and/or metallic powders have not larger than 40µm from the viewpoint of the homogeneity of the molded articles.

The present invention is further illustrated by the following examples without limiting the invention thereto.

### Example 1

A binder comprising 15% by volume of polypropylene carbonates (M̅n=20000), 15 % by volume of the epoxy compound having the following structure 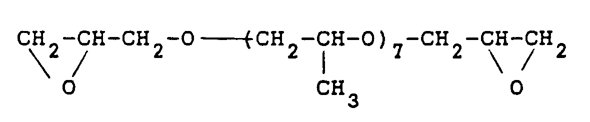
and 10% by volume of stearic acid was added to 60% by volume of aluminum oxide powder (average particle diameter:0.6 µm). The mixture was kneaded at 150°C in a pressure type kneader for 30 minutes.

The resulting kneaded product was pulverized into powders of about 3 mm square. The powders were then injection molded at 160 °C under such conditions that mold temperature was 40 °C and injection molding pressure was 98 MPa (1000 kg/cm²), to obtain a preform having the size of 4.5 x 5.5 x 55 mm. The preform was subjected to X-ray non-destructive inspection to reveal that there is no defect (e.g., cracking) in the preformed. The preform was then heated for about 19 hours in total to debinderize it by raising the temperature of the preform in a nitrogen gas atmosphere at a heating rate of 30 °C/hr from 0 to 100 °C. a heating rate of 20 °C/hr from 100 to 350 °C, and then a heating rate of 30 °C/hr from 350 to 440 °C. The debinderizeded preform was subjected to X-ray non-destructive inspection, to reveal that there was no defect in the debinderized preform.

Further, the debinderized preform was sintered for 2 hours by raising the temperature of the debinderized preform at a heating rate of 200 °C/H to 1600 °C, to obtain a molded ceramic article.

The molded ceramic article was subjected to X-ray non-destructive inspection to reveal that there was no defect (e.g., cracking) in the molded ceramic article.

### EXAMPLE 2

7 % by weight of yttrium oxide and 4 % by weight of aluminum oxide were blended with 89 % by weight of silicon nitride having an average particle diameter of 0.3 µm to prepare ceramic powders.

A binder comprising 15 % by volume of polypropylene carbonate (M̅n=20000), 18 % by volume of the epoxy compound having the following structure 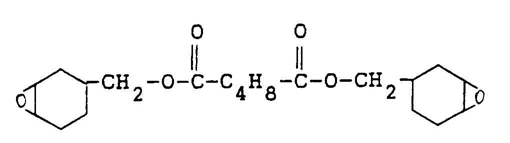
and 10 % by volume of stearic acid was added to 57 % by volume of said ceramic powders. The mixture was subjectd to injection molding and debinderizing in the same manner as in Example 1.

The debinderized preform was sintered at 1800 °C in an N₂ atmosphere under pressure of 0,88 MPa (9 kg/cm²) to produce a molded ceramic article.

The resulting molded ceramic article was subjected to X-ray non-destructive inspection. No defect was observed in the molded article.

### EXAMPLE 3

A binder comprising 10 % by volume of polyethylene carbonate (Mn = 40000), 25 % by volume of the epoxy compound (Mn =1000) having the following structure 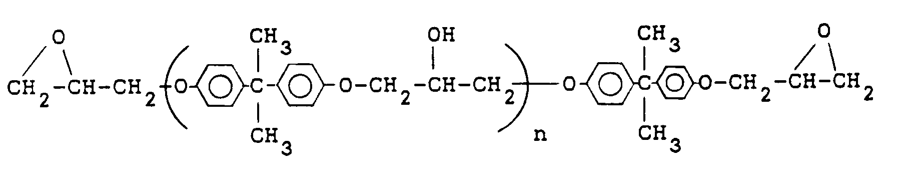
and 10 % by volume of stearic acid was added to 55 % by volume of zirconium oxide having an average particle diameter of 0.3µm and containing 3 mol % of yttrium oxide. The mixture was kneaded at 120 °C with a pressure type kneader for 30 minutes. The kneaded product was pulverized into powders of about 3 mm square. The powders were injection-molded at 120 °C under such conditions that mold temperature was 30 °C and injection molding pressure was 78,5 MPa (800 kg/cm²), to obtain a preform having the size of 5 x 20 x 100 mm. The preform was subjected to X-ray non-destructive inspection. No defect was observed in the preform.

The preform was debinderized by raising the temperature of the preform in air at a heating rate of 30 °C/hr from 0 to 100 °C, at a heating rate of 7 °C/hr from 100 to 350 °C and at a heating rate of 30 °C/hr from 350 to 440 °C.

The preform was sintered for one hour by raising the temperature of the preform at a heating rate of 200 °C/H to 1500 °C to obtain a molded ceramic article. The molded ceramic article was subjected to X-ray non-destructive inspection. No defect (e.g. cracking) was observed in the molded ceramic article.

### EXAMPLE 4

A binder comprising 13 % by volume of polypropylene carbonate (M̅n = 10000), 20 % by volume of the epoxy compound having the following structure 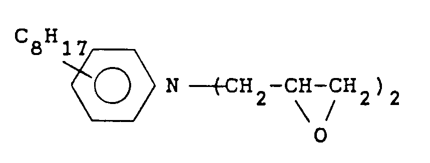
and 10 % by volume of behenic acid was added to 57 % by volume of silicon carbide powder having an average particle size of 0.7µm and containing 0.3 % by weight of boron carbide. A composition for the production of molded ceramic article was obtained in the same manner as in Example 1. The composition was extruded at 160 °C through a 50 mm ⌀ extruder obtain a ceramic preform in the form of a 5mm ⌀ round rod. The rod was cut into five piecies of 10 cm in length, which were subjected to X-ray non-destructive inspection. No defect was observed.

The preform rod was debinderized by raising the temperature of the preform at a heating rate of 30 °C/hr from 0 to 100 °C at a heating rate of 10 °C/hr from 100 to 350 °C and at a heating rate of 30 °C/hr form 350 to 430 °C.

The debinderized rod was sintered in an argon atmosphere under pressure of 0,2 MPa (2kg/cm²) by raising the temperature of the article at a heating rate of 400 °C/hr to 2100 °C and then retaining it at 2100 °C for two hours to obtain a molded ceramic article.

The molded ceramic article was subjected to X-ray non-destructive inspection. No defect was observed in all of five pieces of the molded articles.

### ADVANTAGE OF THE INVENTION

A composition containing an organic binder of the present invention comprising the polyalkylene carbonates and the epoxy compounds can provide a ceramic and/or a metal molded article having no defect (e.g., cracking) in the molded ceramic articles after debinderizing. Further, debinderizing can be conducted in a short time.

## Claims

1. A molding composition comprising a ceramic powder and/or a metallic powder and an organic binder, characterised in that the organic binder comprises as essential ingredients a polyalkylene carbonate and an epoxy compound containing at least one epoxy group in the molecule.

2. A composition according to claim 1 wherein the organic binder is used in an amount of 20 to 65% by volume of the composition.

3. A composition according to claim 1 or 2 wherein the organic binder comprises 10 to 80% by volume of the polyalkylene carbonate and 90 to 20% by volume of the epoxy compound, the volume percentages being based on the volume of the binder.

4. A composition according to claim 1, 2 or 3 wherein the epoxy compound has a molecular weight (Mn) of 100 to 20000.

5. A process for producing molded articles which comprises molding a composition as claimed in any one of the preceding claims.

6. A process for producing molded articles which comprises injection molding a composition as claimed in any one of claims 1 to 4 to provide a preform and heating the preform to remove the organic binder and sinter the ceramic powder and/or metallic powder.

## Patentansprüche

1. Formbare Zusammensetzung, die ein keramisches und/oder ein metallisches Pulver und ein organisches Bindemittel umfaßt, dadurch gekennzeichnet, daß das organische Bindemittel als wesentliche Bestandteile ein Polyalkylencarbonat und eine mindestens eine Epoxygruppe enthaltende Epoxyverbindung enthält.

2. Zusammensetzung nach Anspruch 1, worin das organische Bindemittel in einer Menge von 20 bis 65 Vol.% der Zusammensetzung verwendet wird.

3. Zusammensetzung nach einem der Ansprüche 1 oder 2, worin das organische Bindemittel 10 bis 80 Vol.% Polyalkylencarbonat und 90 bis 20 Vol.% Epoxyverbindung enthält, wobei Vol.% auf das Volumen des Bindemittels bezogen ist.

4. Zusammensetzung nach einem der Ansprüche 1, 2 oder 3, worin die Epoxyverbindung ein Molekulargewicht (Mn) von 100 bis 2000 hat.

5. Verfahren zur Herstellung von geformten Gegenständen, welches das Formen einer Zusammensetzung gemäß einem der vorausgehenden Ansprüche umfaßt.

6. Verfahren zur Herstellung von geformten Gegenständen, welches das Spritzgießen einer Zusammensetzung gemäß einem der Ansprüche 1 bis 4 zur Bildung eines Vorformlings und das Erhitzen des Vorformlings zur Entfernung des organischen Bindemittels und zum Sintern des Keramikpulvers und/oder des Metallpulvers umfaßt.

## Revendications

1. Composition pour moulage, comprenant une poudre céramique et/ou une poudre métallique et un liant organique, **caractérisée** en ce que le liant organique comprend, en tant qu'ingrédients essentiels, un poly(carbonate d'alkylène) et un composé époxy contenant au moins un groupe époxy dans la molécule.

2. Composition selon la revendication 1, dans laquelle le liant organique est utilisé en une proportion de 20 à 65 % en volume, par rapport au volume de la composition.

3. Composition selon la revendication 1 ou 2, dans laquelle le liant organique comprend 10 à 80 % en volume du poly(carbonate d'alkylène) et 90 à 20 % en volume du composé époxy, les pourcentages en volume étant basés sur le volume du liant.

4. Composition selon la revendication 1, 2 ou 3, dans laquelle le composé époxy a une masse moléculaire (Mn) de 100 à 20.000.

5. Procédé de production d'articles moulés, qui comprend le moulage d'une composition telle que revendiquée dans l'une quelconque des revendications précédentes.

6. Procédé de production d'articles moulés, qui comprend le moulage par injection d'une composition telle que revendiquée dans l'une quelconque des revendications 1 à 4, pour l'obtention d'une préforme, et le chauffage de la préforme pour l'élimination du liant organique et le frittage de la poudre céramique et/ou de la poudre métallique.
